# EUROPEAN PATENT APPLICATION

(11) **EP 2 399 776 A2**
(43) Date of publication of application: **28.12.2011**
(21) Application number: 11170903.6
(22) Date of filing: 22.06.2011
(51) Int. Cl.: B60Q 1/14, F21V 14/08, F21S 8/10

(54) **Vehicle headlamp system, control device, and vehicle headlamp**

(30) Priority: 24.06.2010 JP 2010144026
(71) Applicant: Koito Manufacturing Co., Ltd., Tokyo 108-8711 (JP)
(72) Inventor: MOCHIZUKI, Kiyotaka, Shizuoka-shi Shizuoka (JP); OHSHIO, Hirohiko, Shizuoka-shi Shizuoka (JP); MOCHIZUKI, Kazuma, Shizuoka-shi Shizuoka (JP); YOKOI, Shoichiro, Shizuoka-shi Shizuoka (JP); TAKADA, Kenichi, Shizuoka-shi Shizuoka (JP)
(74) Representative: Intès, Didier Gérard André

(57) **Abstract**

A vehicle headlamp system (100) includes a plurality of shades (12a, 12b, 12c, 112a, 112b, 112c, 102, 106) and a shade control section (58). When a first shade is in an operative position, the first shade shields light from a light source (14) in a first light shielding area. When a second shade is in an operative position, the second shade shields the light in a second light shielding area. When observed from a front of the vehicle headlamp (210), the first light shielding area and the second light shielding area overlap each other in a common light shielding area. The shade control section (58) is configured to control a shade actuating section (29, 114) such that, when moving the first shade from the operative position to the retracted position and moving the second shade from the retracted position to the operative position to switch a light distribution pattern, the light is continuously shielded in the common light shielding area.

## Description

The present invention relates to a vehicle headlamp capable of changing a light distribution pattern by switching a plurality of shades.

Vehicle headlamps are designed to produce a low beam and/or a high beam by directly sending out light traveling forward from a light source or by reflecting light from the light source forward using a reflector. The low beam and the high beam have different light distribution patterns. In a four-lamp fixed light distribution headlamp system, two light sources in each of the headlamps are switched on and off respectively to form the low beam or the high beam. In a two-lamp variable light distribution headlamp system, a high beam is formed by light from a single light source in each of the headlamps, and when the light is partially shielded, a low beam is formed.

To switch the beams with a single light source, a movable shade may be provided in a headlamp, such that the shade is moved in accordance with a desired light distribution pattern. For example, there is a rotary shade capable of rotating about a horizontal axis. The rotary shade is rotated by an actuator, such as a motor. A plurality of ridge line sections are formed on the outer circumferential surface of the rotary shade, each of the ridge lines extending in the axial direction of the rotary shade. For example, one ridge line section may be configured to form a low beam light distribution pattern for left-hand traffic, and another ridge line section may be configured to form a low beam light distribution pattern for right-hand traffic.

JP2010-040459A discloses another example in which a plurality of shades is provided in a headlamp to form a plurality of kinds of high beam light distribution patterns. Each of the shades is movable in the vertical direction toward and away from the optical axis of the light source.

However, in a vehicle headlamp apparatus having a plurality of shades to change a light distribution pattern by switching the shades, when switching from one shade to another shade, unnecessary portion of light from a light source may leak through the shading mechanism and cause a glare to drivers or pedestrians in front of the vehicle.

It is an object of the present invention to suppress a glare from a vehicle headlamp capable of changing a light distribution pattern by switching a plurality of shades.

According to an aspect of the present invention, a vehicle headlamp system, a control device and a vehicle headlamp are provided. The vehicle headlamp system, the control device and the vehicle headlamp are interrelated with each other.

The vehicle headlamp system includes a light source, a first shade arranged in front of the light source, a second shade arranged in front of the light source, a shade actuating section configured to move the first shade between an operative position at which the first shade shields light from the light source in a first light shielding area and a retracted position at which the first shade does not shield the light in the first light shielding area, and to move the second shade between an operative position at which the second shade shields the light in a second light shielding area and a retracted position at which the second shade does not shield the light in the second light shielding area, a pattern determining section configured to determine a light distribution pattern to be formed in front of the vehicle in accordance with a condition surrounding the vehicle, and a shade control section configured to send a control signal to control the shade actuating section in accordance with the light distribution pattern determined by the pattern determining section. The first shade and the second shade are arranged such that, when observed from a front of the vehicle headlamp, the first light shielding area and the second light shielding area overlap each other in a common light shielding area. The shade control section is configured to control the shade actuating section such that, when moving the first shade from the operative position to the retracted position and moving the second shade from the retracted position to the operative position to switch the light distribution pattern, the light is continuously shielded in the common light shielding area.

The control device is configured to control a vehicle headlamp including a light source, a first shade arranged in front of the light source, a second shade arranged in front of the light source, and a shade actuating section configured to move the first shade between an operative position at which the first shade shields light from the light source in a first light shielding area and a retracted position at which the first shade does not shield the light in the first light shielding area, and to move the second shade between an operative position at which the second shade shields the light in a second light shielding area and a retracted position at which the second shade does not shield the light in the second light shielding area. The first shade and the second shade are arranged such that, when observed from a front of the vehicle headlamp, the first light shielding area and the second light shielding area overlap each other in a common light shielding area. The control device includes a pattern determining section configured to determine a light distribution pattern to be formed in front of the vehicle in accordance with a condition surrounding the vehicle, and a shade control section configured to send a control signal to control the shade actuating section in accordance with the light distribution pattern determined by the pattern determining section. The shade control section is configured to control the shade actuating section such that, when moving the first shade from the operative position to the retracted position and moving the second shade from the retracted position to the operative position to switch the light distribution pattern, the light is continuously shielded in the common light shielding area.

The vehicle headlamp includes a light source, a first shade arranged in front of the light source, a second shade arranged in front of the light source, and a shade actuating section configured to move the first shade between an operative position at which the first shade shields light from the light source in a first light shielding area and a retracted position at which the first shade does not shield the light in the first light shielding area, and to move the second shade between an operative position at which the second shade shields the light in a second light shielding area and a retracted position at which the second shade does not shield the light in the second light shielding area. The first shade and the second shade are arranged such that, when observed from a front of the vehicle headlamp, the first light shielding area and the second light shielding area overlap each other in a common light shielding area. The vehicle headlamp is configured to receive a control signal indicative of a light distribution pattern to be formed. Upon receipt of the control signal, the shade actuating section moves the first shade from the operative position to the retracted position and moves the second shade from the retracted position to the operative position to switch the light distribution pattern such that the light is continuously shielded in the common light shielding area.

Other aspects and advantages of the present invention will be apparent from the following description, the drawings and the claims.

Hereinafter, exemplary embodiments of the present invention will be described in detail with reference to the drawings including:
FIG. 1: a schematic sectional view of a vehicle headlamp in a vehicle headlamp
   system according to a first exemplary embodiment of the present invention;
FIG. 2: a block diagram of the vehicle headlamp system including the vehicle headlamp of FIG. 1, an on-vehicle camera configured to obtain images of a region in front of the vehicle, and a control device configured to control the formation of the light distribution pattern by the vehicle headlamp;
FIG. 3: a front perspective view of a shade mechanism, a lamp housing and a light
   source of a lamp unit of the vehicle headlamp;
FIG. 4: an enlarged side view of a link mechanism connecting a solenoid and a
   high/low switching shade;
FIG. 5A to 5C:
   front views of the shade mechanism illustrating an example of the timing
   control by a shade actuating section;
FIGS. 6A to 6C:
   front views of the shade mechanism illustrating an example of improved
   timing control by the shade actuating section;

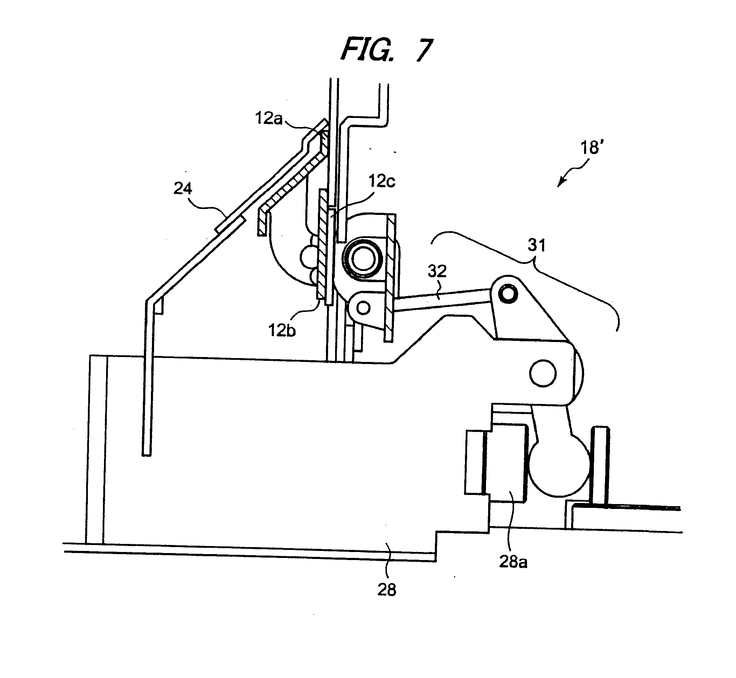

FIG. 7: an enlarged side view of a shade mechanism according to a second exemplary
   embodiment of the present invention;

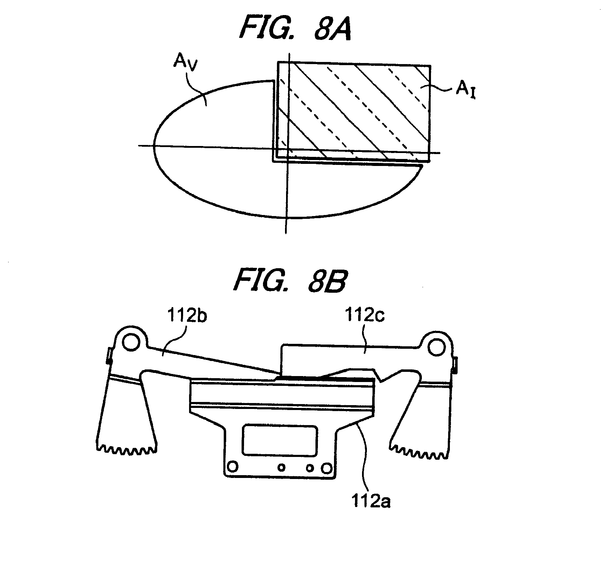

FIG. 8A: a diagram illustrating a light distribution pattern formed by a left vehicle
   headlamp according to a third exemplary embodiment of the present invention;
FIG. 8B: a front view of a shade mechanism in which the shades are arranged to form
   the light distribution pattern of FIG. 8A;

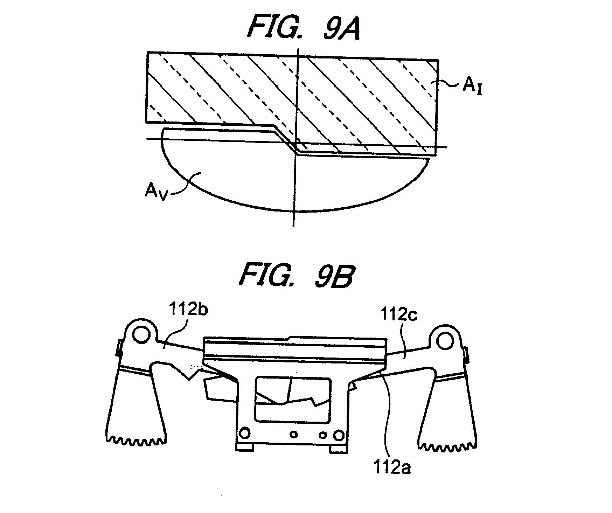

FIG. 9A: a diagram illustrating a light distribution pattern formed by a right vehicle headlamp according to the third exemplary embodiment of the present invention;
FIG. 9B a front view of a shade mechanism in which the shades are arranged to form
   the light distribution pattern of FIG. 9A;

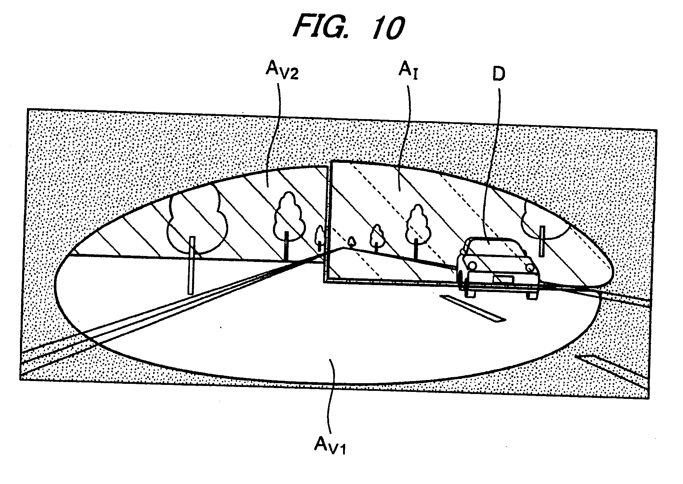

FIG. 10: a diagram illustrating a combined light distribution pattern formed by
   combining the light distribution patterns of FIGS. 8A and 9A;

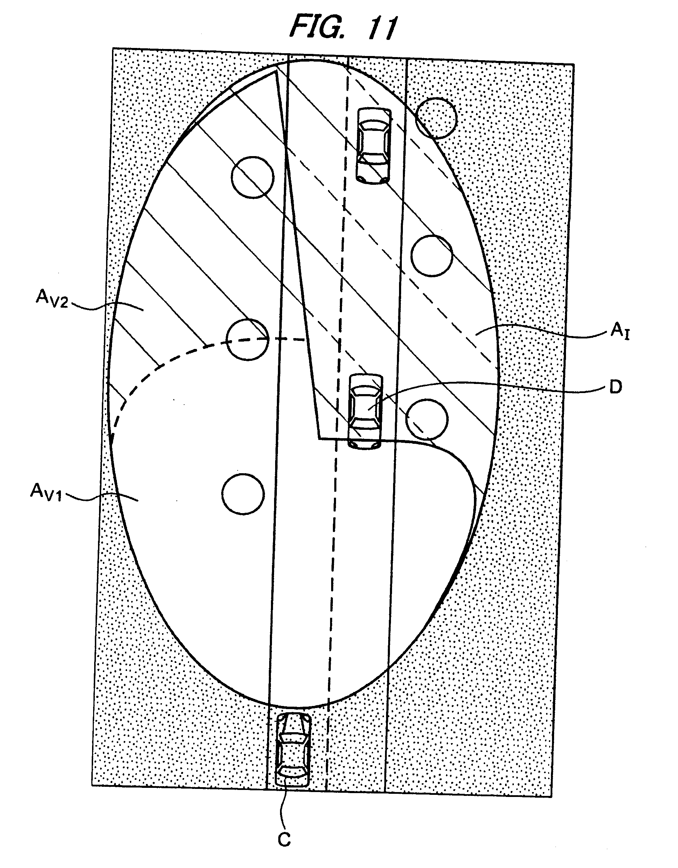

FIG. 11: a diagram illustrating an irradiation range of the combined light distribution
   pattern of FIG. 10; and
FIGS. 12A to 12C:
   schematic views of a lamp unit according to a fourth exemplary embodiment of the present invention.

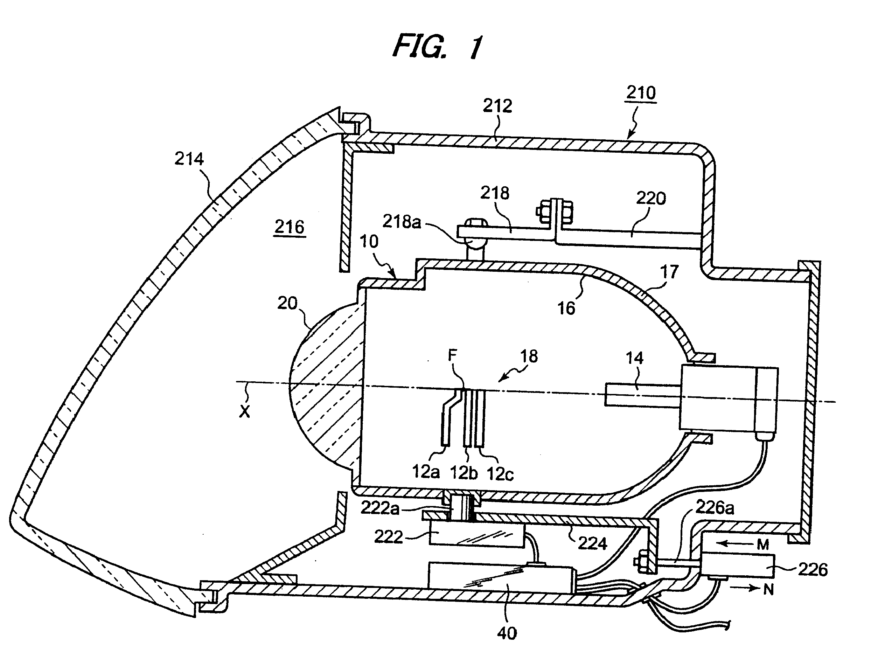

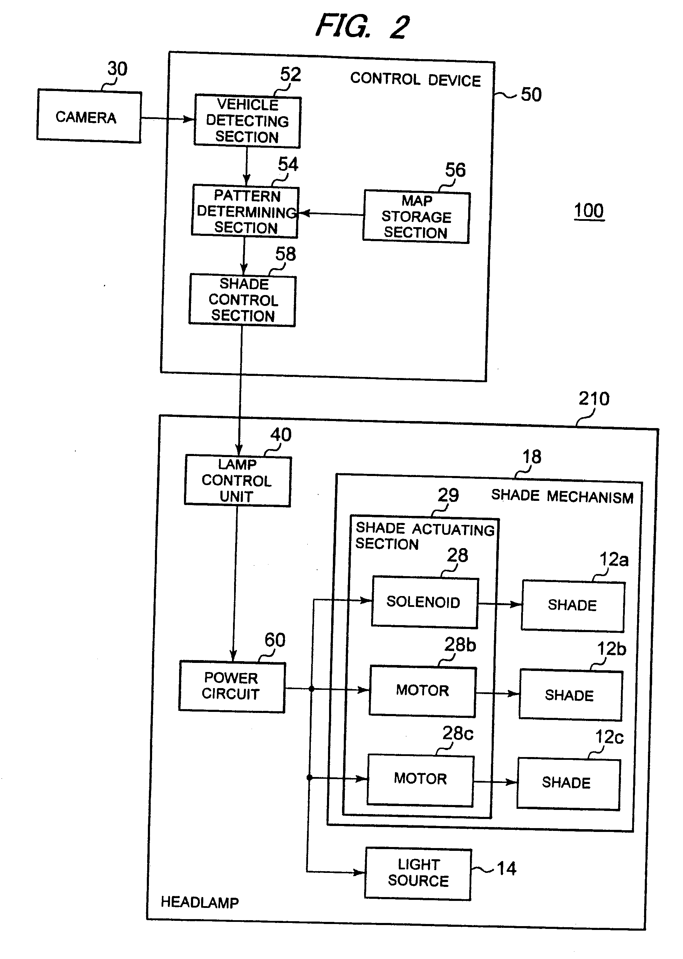

FIG. 1 is a schematic sectional view of a vehicle headlamp 210 of a vehicle headlamp system 100 of FIG. 2. FIG. 1 is partially a sectional view taken along the vertical plane including the optical axis X of the headlamp 210. The vehicle headlamp 210 is a variable light distribution type headlamp arranged on each of the right and left front portion of the vehicle. The configuration of the right headlamp and the right headlamp is substantially the same.

The vehicle headlamp 210 has a lamp body 212 having a front opening and a transparent cover 214 covering the front opening of the lamp body 212. The lamp body 212 and the transparent cover 214 form a lamp chamber 216. A lamp unit 10 is accommodated in the lamp chamber 216 such that the light from the lamp unit 10 irradiate a region in front of the vehicle. A lamp bracket 218 having a pivot mechanism 218a is provided inside the lamp chamber 216 to pivotally support the lamp unit 10 via the pivot mechanism 218a. The lamp bracket 218 is connected to a body bracket 220 extending from the inner surface of the lamp body 212, using a faster such as a screw. Accordingly, the lamp unit 10 is positioned inside the lamp chamber 216, and is pivotable around the pivot mechanism 218a.

A rotation shaft 222a of a swivel actuator 222 is attached to a lower portion of the lamp unit 10. The swivel actuator 222 is a part of an adaptive front-lighting system (AFS) for irradiating a region in the traveling direction of the vehicle when, for example, the vehicle is traveling on a curved road. The swivel actuator 222 swivels the lamp unit 10 around the pivot mechanism 218a toward the traveling direction of the vehicle based on information provided from the vehicle, e.g. a steering angle, road data provided by a navigation system, position of a vehicle traveling in front, etc. For example, when the road is curved, the lamp unit 10 is swiveled from a straight ahead irradiating orientation toward a direction in which the road is curved, so that improved field of vision is provided to the driver. The swivel actuator 222 includes, for example, a stepping motor. When the swiveling angle is fixed, a solenoid may be used in the swivel actuator 222.

The swivel actuator 222 is fixed to a unit bracket 224. A leveling actuator 226 disposed outside the lamp body 212 is connected to the unit bracket 224. The leveling actuator 226 has a rod 226a and, for example, a motor to extend and retract the rod 226a in the directions M, N shown in FIG. 1. When the rod 226a is extended in the direction M, the lamp unit 10 is tilted about the pivot mechanism 218a to be in a rearwardly inclined orientation. When the rod 226a is retracted in the direction N, the lamp unit 10 is tilted about the pivot mechanism 218a to be in a forwardly inclined orientation. When the lamp unit 10 is tilted to be in the rearwardly inclined orientation, the optical axis X is adjusted upward. When the lamp unit 10 is tilted to be in the forwardly inclined orientation, the optical axis X is adjusted downward. By this leveling adjustment, the optical axis X can be adjusted in accordance with the orientation of the vehicle, whereby the irradiation range from the vehicle headlamp 210 can be adjusted.

A lamp control unit 40 is arranged, for example, on the inner surface of the lamp chamber 216 and below the lamp unit 10. The lamp control unit 40 controls turning on and off of the lamp unit 10 and the formation of a light distribution pattern. The lamp control unit 40 also controls the operations of the swivel actuator 222 and the leveling actuator 226.

The lamp unit 10 includes a light source 14, a reflector 16, a lamp housing 17 having an inner surface on which the reflector 16 is formed, a shade mechanism 18, and a projection lens 20. The shade mechanism 18 includes a plurality of shades 12a, 12b, 12c. The light source 14 is, for example, an incandescent lamp, a halogen lamp, a discharge lamp or an LED. In this exemplary embodiment, the light source 14 is a halogen lamp. The reflector 16 reflects the light emitted from the light source 14. A portion of direct light from the light source 14 and a portion of the light reflected by the reflector 16 travels toward the projection lens 20 over the shades 12a, 12b, 12c.

The projection lens 20 is disposed on the optical axis X extending in the front-rear direction of the vehicle, and the light source 14 is disposed behind the rear focal plane of the projection lens 20. The projection lens 20 is a plano-convex aspheric lens having a convex front surface and a flat rear side surface. The projection lens 20 projects a light source image formed on the rear focal plane on a virtual vertical screen disposed ahead of the lamp unit 10 as an inverted image.

Each of the shades 12a, 12b, 12c is a plate-like shade. For example, the shade 12a serves as a high/low switching shade, the shade 12b serves as a one-side beam shade, and the shade 12c serves as a V-beam shade. However, shades having any other shapes can be combined. The shade mechanism 18 is configured such that each of the shades 12a, 12b, 12c is movable to a position on or near the rear focal plane including the rear focal point of the projection lens 20, so that an upper end portion of each of the shades 12a, 12b, 12c is positioned on the optical axis X, and a light distribution pattern having a cutoff line corresponding to the shape of the upper end portion is formed. For example, a low beam light distribution pattern or a light distribution pattern partially having the characteristic of the low beam light distribution pattern is formed by moving one of the shades 12a, 12b, 12c of the shade mechanism 18 to the optical axis X to shield a portion of the light emitted from the light source 14. When the shades 12a, 12b, 12c are positioned away from the optical axis X so that portion of the light emitted from the light source 14 is not shielded, a high beam light distribution pattern is formed.

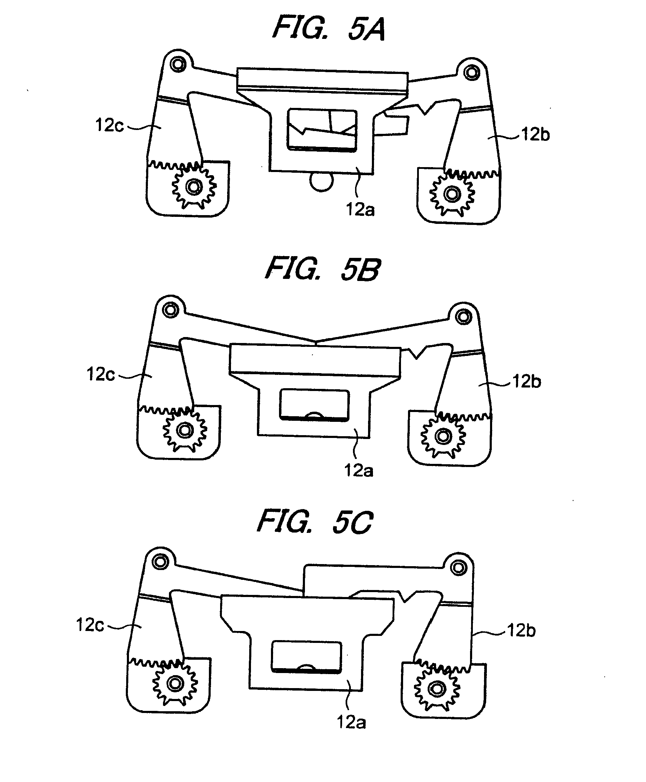

In this exemplary embodiment, two shades 12b, 12c are each driven by a DC motor 28b, 28c, and the remaining shade 12a is driven by a solenoid 28. In the following description, an "operative position" is a position at which the upper end portion of the shade is located on the optical axis X so that the shade shields a portion of the light coming from the light source 14 and the reflector 16, and a "retracted position" is a position at which the upper end portion of the shade is located away from the optical axis X so that the shade does not shield the portion of the light. When the shade is at the operative position, the shade shields the light in a light shielding area. The light shielding areas of the respective shades are different from each other, but overlap in a common light shielding area when observed in a direction of the optical axis X (see, e.g., FIGS. 5A to 6C).

In this exemplary embodiment, the high/low switching shade 12a and the one-side high beam shade 12b are disposed such that the focal point F is positioned between the high/low switching shade 12a and the one-side high beam shade 12b. In other words, when the one-side high beam shade 12b is at the operative position, the upper end portion thereof is disposed on the focal point F. When the one-side high beam shade 12b is at the retracted position and when the high/low switching shade 12a is at the operative position, the upper end portion of the high/low switching shade 12a is disposed on the focal point F. The V-beam shade 12c is arranged behind the focal point F on a side closer to the light source 14.

Conventionally, in a vehicle headlamp in which a light distribution pattern is made variable by switching a plurality of shades arranged side by side along the optical axis, a shade for forming a frequently used light distribution pattern, such as a low beam light distribution pattern, is disposed on the focal point. With this configuration, however, the other shades are positioned away from the focal point. Therefore, when forming light distribution patterns using the other shades, color fringe due to chromatic aberration occur on the cutoff line and the cutoff line becomes unclear due to out-of-focus.

On the other hand, when the two shades, e.g., the high/low switching shade 12a and the one-side high beam shade 12b, are disposed such that the focal point F is positioned therebetween as described above, and when the high/low switching shade 12a and the one-side high beam shade 12b are used together, the shades are positioned on the focal point F. Hence, a light distribution pattern having a clear cutoff line is obtained. Also when the high/low switching shade 12a or the one-side high beam shade 12b is used alone, the distance between the focal point F and each of the shades becomes small, so that the generation of color fringe due to chromatic aberration and blurring on the cutoff line is suppressed.

FIG. 2 is a block diagram illustrating a configuration of the vehicle headlamp system 100 including the vehicle headlamp 210 configured as described above, an on-vehicle camera 30 configured to obtain images of a region ahead of the vehicle, and a control device 50 for controlling the formation of a light distribution pattern by the vehicle headlamp 210.

The respective blocks of the control device 50 in FIG. 2 can be implemented by devices such as a CPU and a memory as hardware, and by computer programs loaded into the memory as software. The blocks are indicated as function blocks that are implemented by a cooperation of such hardware and software. It will be understood by those skilled in the art that these function blocks can be implemented in various ways depending on the combination of hardware and software.

The camera 30 is installed in the front portion of the vehicle so as to serve as object recognizing means for detecting objects, such as a preceding vehicle, an oncoming vehicle and a pedestrian. The camera 30 may be controlled exclusively by the control device 50 or may be shared by another system.

Based on the images taken by the camera 30, the control device 50 instructs the vehicle headlamp 210 to generate a suitable light distribution pattern. The control device 50 includes a vehicle detecting section 52, a pattern determining section 54, a map storage section 56, and a shade control section 58.

Upon receiving the image data from the camera 30, the vehicle detecting section 52 detects a position of a preceding vehicle or an oncoming vehicle by searching for characteristics indicating vehicles in the image data. Since this kind of method for detecting the positions of the vehicles is known, the detailed description thereof will be omitted.

The pattern determining section 54 determines a light distribution pattern to be formed by the right and left vehicle headlamps 210 such that a region in front of the vehicle is irradiated by a suitable light distribution pattern depending on the presence and movement of other vehicles detected by the vehicle detecting section 52. Information on the determined light distribution pattern is sent to the shade control section 58.

The map storage section 56 has a map according to which the pattern determining section 54 determines a light distribution pattern on the basis of the position of the detected vehicle in front. This map may be a two-dimensional map in which a light distribution pattern is determined depending on the horizontal and vertical positions of the vehicle appearing in the image of the forward region. Alternatively, the map may be a form of a table in which a light distribution pattern is determined for each section of the image divided into a plurality of sections.

For example, when a preceding vehicle or an oncoming vehicle is detected, the pattern determining section 54 refers to the map in the map storage section 56 and determines to form a low beam light distribution pattern to prevent glare. When a vehicle is not detected, the pattern determining section 54 determines to form a high beam light distribution pattern having a wider irradiation range to improve the field of vision of the driver.

Further, when no preceding vehicle is present but an oncoming vehicle or a pedestrian is present in a left-hand traffic region, the pattern determining section 54 refers to the map in the map storage section 56 and determines to form a left-side high beam light distribution pattern in which the high beam is used only for the left lane. Still further, when only a preceding vehicle is present and neither an oncoming vehicle nor a pedestrian is present, the pattern determining section 54 determines to form a right-side high beam light distribution pattern in which the high beam is used only for the oncoming lane.

In addition to the light distribution patterns described above, various light distribution patterns can optionally be formed by combining different shades of the right and left vehicle headlamps 210. Since this kind of adaptive driving beam (ADB) system itself, which is capable of changing the light distribution pattern depending on the position of the vehicle running ahead, is known, detailed description will be omitted.

The shade control section 58 outputs a control signal to the lamp control unit 40 of the vehicle headlamp 210 so that the light distribution pattern determined by the pattern determining section 54 is formed.

The vehicle headlamp 210 includes the lamp control unit 40, a power circuit 60, the light source 14 and the shade mechanism 18.

The lamp control unit 40 receives the signal from the control device 50 and controls the shade mechanism 18 through the power circuit 60 so that the determined light distribution pattern is formed by the vehicle headlamp 210.

The shade mechanism 18 includes the shades 12a, 12b, 12c and the shade actuating section 29. The shade actuating section 29 includes the solenoid 28 and the motors 28b, 28c serving as means for driving the respective shades 12a, 12b, 12c. The high/low switching shade 12a is driven by the solenoid 28, the one-side high beam shade 12b is driven by the first motor 28b, and the V-beam shade 12c is driven by the second motor 28c. Driving means is provided for each of the three shades 12a, 12b, 12c. Thus, the respective shades 12a, 12b, 12c can be operated independently.

Next, the operation of the vehicle headlamp system shown in FIG. 2 will be described. The vehicle detecting section 52 detects the position of the preceding vehicle by analyzing an image taken by the camera 30. The pattern determining section 54 determines a light distribution pattern to be formed by the vehicle headlamps 210 referring to the map in the map storage section 56. The shade control section 58 sends, to the lamp control unit 40, a control signal for moving the shade corresponding to the determined light distribution pattern to the operative position. The lamp control unit 40 controls the shades 12a, 12b, 12c according to the control signal.

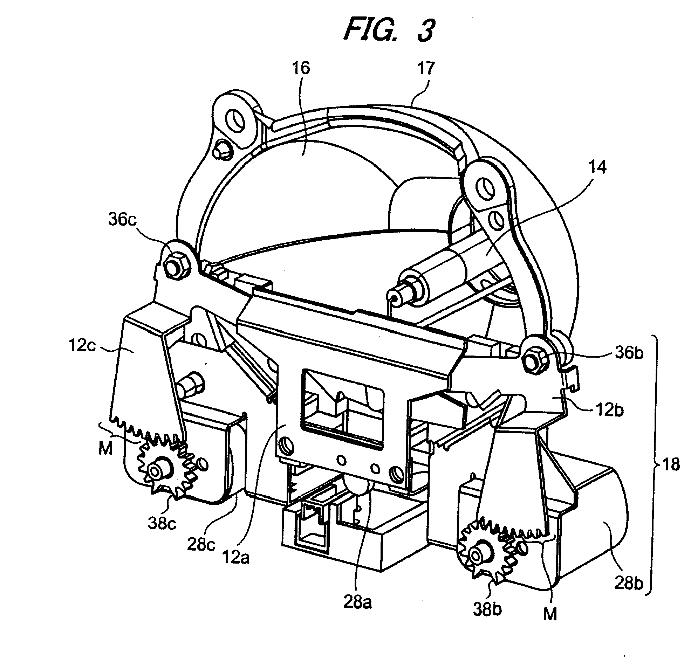

FIG. 3 is a perspective view of the shade mechanism 18, the lamp housing 17 and the light source 14 observed from a side of the projection lens 20.

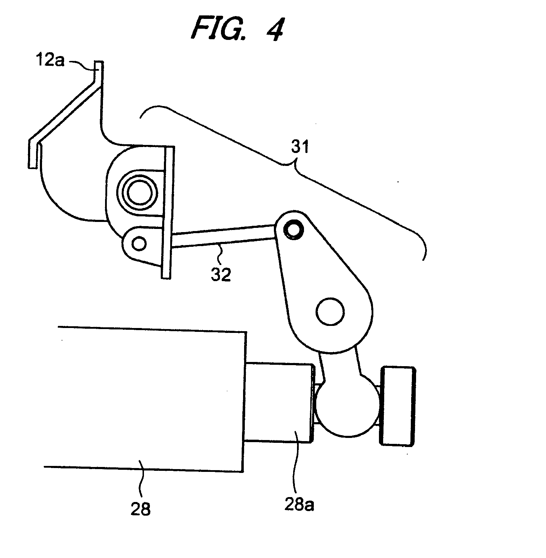

When the high/low switching shade 12a is at the operative position, the high/low switching shade 12a shields the light in a light shielding area for forming the low beam light distribution pattern. When the high/low switching shade 12a is at the retracted position, the high/low switching shade 12a does not shield the light in the light shielding area so that the high beam light distribution pattern can be formed. The high/low switching shade 12a has a shape of a bent plate and is installed so that its upper end portion is positioned on the optical axis X. The upper end portion of the high/low switching shade 12a has a shape corresponding to a low-beam cutoff line. The lower end of the high/low switching shade 12a is coupled to the drive shaft 28a of the solenoid 28 via a link mechanism (see FIG. 4). The drive shaft 28a of the solenoid 28 is configured to extend in a direction toward the light source 14 when the solenoid 28 is turned on, and to return in a direction toward the projection lens 20 by virtue of a return spring (not shown) when the solenoid 28 is turned off. When the solenoid 28 is turned off, the high/low switching shade 12a is moved to the operative position shown in FIG. 3. When the solenoid 28 is turned on, the high/low switching shade 12a is moved to the retracted position.

Each of the one-side high beam shade 12b and the V-beam shade 12c has an L-shape as a whole and has a horizontal portion that extends in the horizontal direction to shield the light and a vertical portion that extends in the vertical direction to transmit the rotation force of the DC motor. The upper end portion of the horizontal portion of the one-side high beam shade 12b is configured to form a one-side high light distribution pattern when the one-side high beam shade 12b is at the operative position. When the one-side high beam shade 12b is at the operative position, the one-side high beam shade 12b shields the light in a light shielding area for forming the one-side high light distribution pattern. When the one-side high beam shade 12b is at the retracted position, the one-side high beam shade 12b does not shield the light in the light shielding area so that the high beam light distribution pattern can be formed. The V-beam shade 12c is configured to form a V-beam light distribution pattern when the V-beam shade 12c is at the operative position. When the V-beam shade 12c is at the operative position, the V-beam shade 12c shields the light in a light shielding area for forming the V-beam light distribution pattern. When the V-beam shade 12c is at the retracted position, the V-beam shade 12c does not shield the light in the light shielding area so that the high beam light distribution pattern can be formed. These three shades 12a, 12b, 12c are arranged such that, when observed from the front of the headlamp 210, the respective light shielding areas overlap each other in a common light shielding area.

The one-side high beam shade 12b and the V-beam shade 12c are held by rotation shafts 36b, 36c, respectively, so as to be rotatable with respect to the lamp housing 17, each of the rotation shafts 36b, 36c being provided at a joint portion of the horizontal portion and the vertical portion.

The DC motors 28b, 28c are disposed at the left lower and right lower positions on the lamp housing 17, respectively. Gears 38b, 38c are arranged at the distal ends of the rotation shafts of the DC motors 28b, 28c, respectively. The gears 38b, 38c are engaged with the teeth M respectively formed at the lower ends of the vertical portions of the shades 12b, 12c. When the DC motors 28b, 28c rotate, the rotation forces thereof are transmitted from the gears 38b, 38c to the teeth M, and the shades 12b, 12c are rotated around the rotation shafts 36b, 36c. Since the teeth engaging with the gear are formed directly on each of the shades, the number of gear components is reduced. As a result, the driving accuracy of the mechanism can be improved, with low cost and light weight.

In this exemplary embodiment, the shades 12b, 12c are moved from their operative positions to their retracted positions (see FIG. 3) by the rotations of the DC motors 28b, 28c, respectively. The shades 12b, 12c are respectively provided with stoppers (not shown). The positions of the shades 12b, 12c at the time when the shades make contact with the stoppers correspond to the retracted positions of the shades.

The shades 12b, 12c are moved from their retracted positions to their operative positions by the restoring forces of return springs (not shown) attached to the respective shades 12b, 12c. Alternatively, the shades 12b, 12c may be moved from their retracted positions to their operative positions by reversely rotating the DC motors 28b, 28c.

FIG. 4 is an enlarged side view showing a link mechanism 31 via which the solenoid 28 and the high/low switching shade 12a are coupled. The drive shaft 28a of the solenoid 28 is fixed to the link mechanism as shown in FIG. 4. A rod 32 is provided at the lower end portion of the high/low switching shade 12a, and the rod 32 is connected to the link mechanism 31. When the solenoid 28 is turned off, the high/low switching shade 12a is moved to the operative position shown in FIG. 3. When the solenoid 28 is turned on, the high/low switching shade 12a is moved to the retracted position.

With regard to the high/low switching shade, the position of the high/low switching shade is switched between the operative position and the retracted position. Hence, an actuator can be configured by a combination of a solenoid and a return spring. With regard to the remaining two shades, a single actuator may be used to drive the two shades to move the one-side high beam shade to the operative position, to move the V-beam shade to the operative position, and to move the two shades to their retracted positions. However, in order to quickly and accurately carry out these switching operations, a stepping motor is suitable, which is costly than the combination of a solenoid and a return spring.

According to the shade mechanism 18 of this exemplary embodiment, the three shades are driven by three separate actuators, individually. The shades can thus be controlled independently.

Furthermore, in this exemplary embodiment, the operation of each of the shades can be carried out by the switching between the operative position and the retracted position. Hence, the actuator may be relatively inexpensive ones, such as a solenoid or a DC motor. Moreover, the shade mechanism has a simple configuration in which the shade contacts the stopper when the actuator is turned on and the shade is returned to its original position by the return spring when the actuator is turned off. Hence, the manufacturing cost of the shade mechanism can be lowered further.

Besides, in this exemplary embodiment, the DC motors having a relatively small volume can be disposed on the right and left lower sides of the lamp housing 17 in a balanced manner. Hence, the layout configuration of the lamp unit can be made easy. In addition, since no link mechanisms are required for the DC motors, the layout configuration of the lamp unit can be made easier.

Still further, since the movement of the drive shaft of the solenoid is transmitted to the high/low switching shade via the link mechanism in this exemplary embodiment, the degree of freedom of the position of the solenoid inside the lamp unit can be improved by changing the structure and direction of the link.

In the conventional vehicle headlamp apparatus in which three shades are selectively moved to change the light distribution pattern, unnecessary portion of light may leak through the shade mechanism when switching the light distribution patterns, and may instantaneously cause glare. For example, when switching from the one-side high light distribution pattern to the V-beam light distribution pattern with a configuration in which the one-side high beam shade and the V-beam shade are moved together via a link mechanism, the one-side high beam shade is moved from the operative position to the retracted position while the V-beam shade is moved from the retracted position to the operative position. Thus, there is a moment where an area below the horizontal line where it is included in the light shielding areas of both of the shades, i.e. the common light shielding area is not covered by either of the shades, thereby generating glare.

On the other hand, in this exemplary embodiment, since the shades are configured so as to be movable independently, the movement timings of the shades can be made different from each other, whereby the generation of glare can be suppressed during the switching of the light distribution pattern. For example, when switching from the one-side high light distribution pattern to the V-beam light distribution pattern, the timings are adjusted so that the V-beam shade is first moved to the operative position and then the one-side high beam shade is moved to the retracted position, whereby the light is continuously shielded in the common light shielding area below the horizontal line during the exchange of the shades. Accordingly, the generation of glare can be prevented.

According to this exemplary embodiment, when both the high/low switching shade and the one-side high beam shade are at the operative positions, interference occurs between the two shades. Hence, when the shade switching is carried out between these two shades, a delay control is executed. Timing control for this purpose will be described below.

FIGS. 5A to 5C are front views illustrating an example of the timing control of the shade actuating section in the vehicle headlamp apparatus according to this exemplary embodiment. In this example, the low beam light distribution pattern is switched to the one-side high light distribution pattern.

In FIG. 5A, the high/low switching shade 12a is at the operative position, and the one-side high beam shade 12b and the V-beam shade 12c are at their respective retracted positions. With this arrangement, the vehicle headlamp forms the low beam light distribution pattern. In this state, when the one-side high beam shade 12b is moved to the operative position, interference occurs between the shades 12, 12b at the focal point F. Hence, timing control may be performed such that the high/low switching shade 12a is first moved to the retracted position as shown in FIG. 5B and then the one-side high beam shade 12b is moved to the operative position as shown in FIG. 5C.

However, although no interference occurs between the shades 12a, 12b by virtue of this timing control, the light is not shielded in the common light shielding area below the horizontal line at the time shown in FIG. 5B, and glare is generated as a result.

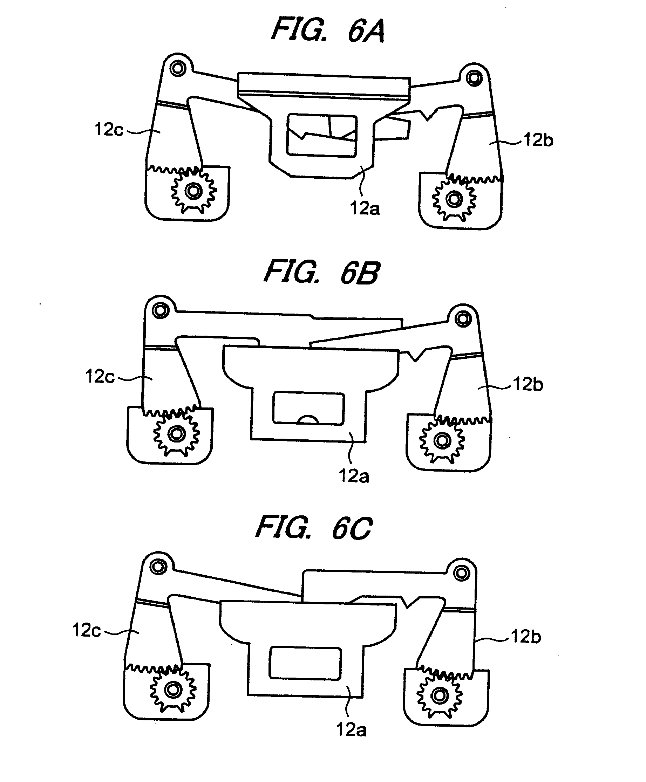

FIGS. 6A to 6C are front views illustrating improved timing control of the shade actuating section in the vehicle headlamp apparatus according to this exemplary embodiment. Similarly to FIGS. 5A to 5C, the low beam light distribution pattern is switched to the one-side high light distribution pattern.

In FIG. 6A, the high/low switching shade 12a is at the operative position, and the one-side high beam shade 12b and the V-beam shade 12c are at their respective retracted positions. With this arrangement, the vehicle headlamp forms the low beam light distribution pattern.

Next, as shown in FIG. 6B, the V-beam shade 12c is moved to the operative position and then the high/low switching shade 12a is moved to the retracted position. Since the V-beam shade 12c shields light in a light shielding area above the horizontal line where the one-side high beam shade 12b shields light, no glare is generated during the switching.

Then, as shown in FIG. 6C, the one-side high beam shade 12b is moved to the operative position and then the V-beam shade 12c is moved to the retracted position. No glare is generated either during this switching operation. Also when switching the one-side high light distribution pattern to the low beam light distribution pattern, the generation of glare can also be prevented by reversing the above-mentioned operation.

As described above, when the high/low switching shade 12a is switched to the one-side high beam shade 12b, the V-beam shade 12c that does not interfere with the shades 12a, 12b is once moved to the operative position and then the high/low switching shade 12a or the one-side high beam shade 12b is moved to the retracted position. Hence, the generation of glare can be prevented.

Next, another example of the shade mechanism will be described below. FIG. 7 is an enlarged side view showing a configuration of a shade mechanism 18' according to a second exemplary embodiment. As in the case of FIG. 4, the high/low switching shade 12a is connected to the drive shaft 28a of the solenoid 28 via the link mechanism 31 and the rod 32. The V-beam shade 12c is disposed closer to the light source 14 than the high/low switching shade 12a and the one-side high beam shade 12b. The high/low switching shade 12a and the one-side high beam shade 12b are disposed so that their upper ends are aligned with the focal point F of the lens when they are moved to the operative positions.

In this exemplary embodiment, another shade, that is, an OHS overhead sign) (OHS) shade 24, is provided adjacent to the high/low switching shade 12a and closer to the projection lens than the shade 12a. A reflecting surface is formed on the upper face of this OHS shade 24. When the high/low switching shade 12a is located at the operative position, that is, when the low beam light distribution pattern is formed, the reflected light from the reflector 16 is reflected by the reflecting surface of the OHS shade 24, and a slight amount of diffused light is applied to the area above the horizontal line. By virtue of this diffused light, for example, the vicinity of a road sign provided above a road is irradiated, and the visibility of the road sign can be improved. Since the area of the reflecting surface of the OHS shade 24 is slight, there is no worry about giving glare to the driver of the oncoming vehicle.

Since the three shades that are used while being switched are respectively driven by separate driving means in the exemplary embodiments as described above, the shades can be moved independently. Furthermore, it is possible to avoid a situation in which no shade is present on the optical axis during the switching of the light distribution pattern by adjusting the operation timings of the shades. As a result, the generation of glare during the switching of the light distribution pattern can be suppressed, and there is no possibility that glare may be misunderstood as passing light.

In the above-mentioned exemplary embodiments, the shade mechanism having three shades has been described. However, even in the case that four or more shades are used, the movements of the shades can be controlled so that no glare occurs by using an appropriate link mechanism.

The present invention is not limited to the exemplary embodiments described above, and various modifications and changes can be made therein based on the knowledge of those skilled in the art. Examples of such modifications will be described below as further exemplary embodiments. The features of the exemplary embodiments and the following modifications can be optionally combined to achieve the respective effects thereof.

In the vehicle headlamp capable of changing its light distribution pattern described in the exemplary embodiments, in the case that a light distribution pattern obtained by using part of the high beam light distribution pattern is selected as in the case of a one-side high beam or a V-beam, the area around the preceding vehicle is light-shielded so that no glare is given to the driver of the preceding vehicle. As a result, the area around the preceding vehicle becomes dark, and it becomes difficult for the camera to recognize the situation of the area around the preceding vehicle.

For the purpose of solving this problem, it has been conventionally conceived that an infrared night vision device incorporating an infrared projector is installed in a vehicle. However, the infrared projector is required to be installed in the vehicle in addition to the headlamps. As a result, problems occur that the space for the installation of the projector becomes insufficient, the power consumption of the vehicle increases, and the cost thereof also increases.

Hence, in this example, the shades provided for the vehicle headlamp are made of a visible light cut filter that absorbs visible light and allows infrared light to pass through. Hence, even the areas shielded by the shades are irradiated by infrared light. By the installation of an infrared camera different from an ordinary camera in the vehicle, the situation of the area around the preceding vehicle can be grasped without giving glare to the driver of the preceding vehicle.

FIGS. 9 to 12 are views illustrating a third exemplary embodiment in which the shades made of a visible light cut filter are used to form a left high beam. In this example, it is assumed that since an oncoming vehicle is detected by the vehicle detecting section 52 shown in FIG. 2, the pattern determining section 54 selects a left-side high light distribution pattern.

FIG. 8A shows a light distribution pattern formed by a left vehicle headlamp 210L and FIG. 8B shows the positions of shades 112a to 112c at the time when the light distribution pattern is formed. The shades 112a to 112c correspond to the shades 12a, 12b, 12c described in the exemplary embodiments and have shapes similar to those of the shades 12a, 12b, 12c. The configuration of the vehicle headlamp is similar to that according to the exemplary embodiments, except that the shades 112a to 112c are made of a visible light cut filter.

As shown in FIG. 8B, in the left vehicle headlamp, the high/low switching shade 112a is moved to the retracted position, the one-side high beam shade 112b is moved to the retracted position, and the V-beam shade 112c is moved to the operative position. As a result, as shown in FIG. 8A, an area Aᵥ corresponding to the left-side high light distribution pattern is irradiated by visible light, and an area A_{I} above the horizontal line and on the right side of the vertical line is irradiated by infrared light.

FIG. 9A shows a light distribution pattern formed by a right vehicle headlamp 210R, and FIG. 9B shows the positions of the shades 112a to 112c at the time when the light distribution pattern is formed.

As shown in FIG. 9B, in the right vehicle headlamp, the high/low switching shade 112a is moved to the operative position, the one-side high beam shade 112b is moved to the retracted position, and the V-beam shade 112c is moved to the retracted position. As a result, as shown in FIG.9A, an area Aᵥ corresponding to the low beam light distribution pattern is irradiated by visible light, and an area A_{I} above the horizontal line is irradiated by infrared light.

FIG. 10 is a view showing a light distribution pattern obtained by combining the light distribution patterns shown in FIGS. 8A and 9A formed by the right and left vehicle headlamps in which the shades are disposed as shown in FIGS. 8B and 9B. In FIG. 10, an area A_{V1} is an area irradiated by visible light using the right and left vehicle headlamps. An area Aᵥ₂ is an area irradiated by visible light using the left vehicle headlamp and irradiated by infrared light using the right vehicle headlamp. An area A_{I} is an area irradiated by infrared light using the right vehicle headlamp. Since the area in which the oncoming vehicle is present is irradiated only by infrared light, no glare is given to the driver of the oncoming vehicle.

FIG. 11 is a view showing an irradiation range ahead of a subject vehicle C. Areas Aᵥ₁, A_{V2} and A_{I} in this figure respectively correspond to those shown in FIG. 10. As shown in the figure, far distance visibility can be obtained securely by the high beam in the left forward area in which no oncoming vehicle is present. On the right forward area in which oncoming vehicles travel, the low beam is used so as not to give glare, and the irradiation range of the infrared light is equivalent to that of the high beam. In the areas Aᵥ₂ and A_{I}, it is possible to detect whether any obstacle is present using the infrared camera.

With this example, switching can be made between the irradiation area of the visible light and the irradiation area of the infrared light using the vehicle headlamps of one vehicle as described above. Hence, the forward visibility of the driver is obtained securely using visible light, and obstacles can be detected using infrared light.

In the exemplary embodiments described above, the actuating timings of the shades are adjusted by timing control to prevent glare. Instead of this, a light-leak preventing plate that performs a delayed operation may be additionally installed behind the high/low switching shade.

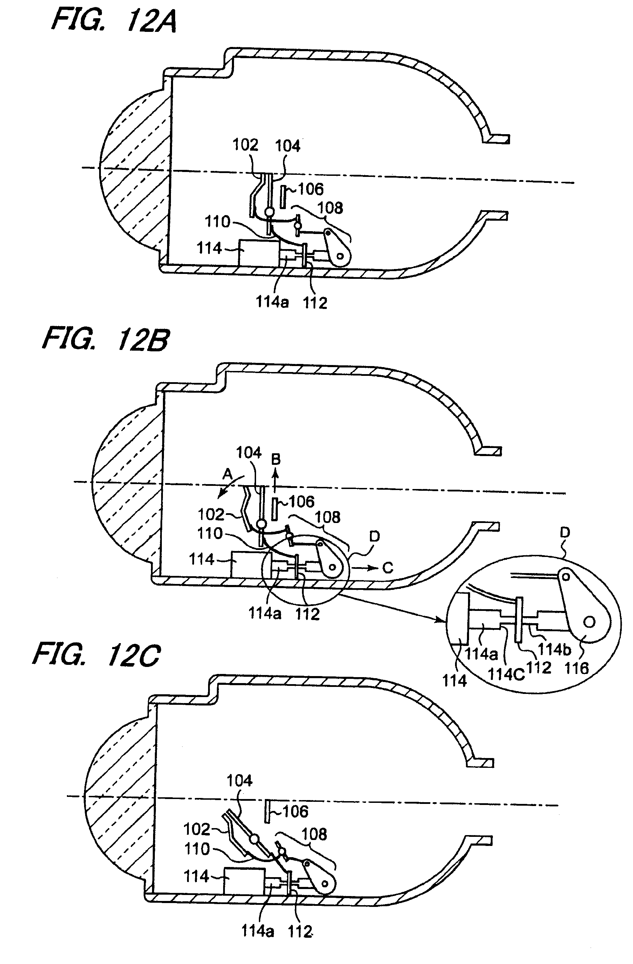

FIGS. 12A to 12C are schematic views showing a structure of a lamp unit according to a fourth exemplary embodiment. In FIGS. 12A to 12C, only a high/low switching shade 102, an auxiliary shade 104 and a V-beam shade 106 are shown as shades. However, another shade, such as a one-side high beam shade, may be provided behind the V-beam shade.

FIG. 12A shows the positions of the respective shades in the case that the low beam light distribution pattern is formed. The auxiliary shade 104 is disposed behind the high/low switching shade 102, and the V-beam shade 106 is disposed therebehind. The high/low switching shade 102 is connected to the drive shaft 114a of a solenoid 114 via a link mechanism 108, and the auxiliary shade 104 is connected to the drive shaft 114a of the solenoid 114 via a link 110. By the use of this link structure, both the high/low switching shade and the auxiliary shade can be driven using a single solenoid, that is, the solenoid 114. The V-beam shade 106 is driven by a motor, independently of the other shades.

FIG. 12B shows the positions of the respective shades being in the middle of switching. The V-beam shade 106 is moved upward in the direction B by the motor. Since the link mechanism of the high/low switching shade 102 is directly connected to the drive shaft 114a of the solenoid, when the drive shaft 114a of the solenoid is moved rightward in the direction C, the high/low switching shade 102 is rotated in the direction A via the link mechanism 108. On the other hand, the link 110 of the auxiliary shade 104 is connected to the drive shaft 114a of the solenoid via a ring 112 loosely fitted on the small-diameter section 114b formed on the drive shaft 114a as shown in an enlarged view D. Hence, even if the drive shaft 114a of the solenoid is moved in the direction indicated by arrow C in the figure, the ring 112 of the auxiliary shade 104 does not operate until the shoulder section 114c of the of the drive shaft makes contact with the ring 112. The auxiliary shade 104 operates later than the high/low switching shade 102 owing to play corresponding to the length of the small-diameter section 114b. As a result, the auxiliary shade 104 stays at its original position during the period of time corresponding to the length of the play, and the generation of glare is prevented during the period.

FIG. 12C shows the positions of the respective shades in the case that the V-beam light distribution pattern is formed. When the drive shaft 114a of the solenoid is moved by the length of the play, the auxiliary shade 104 is rotated to a position adjacent to the high/low switching shade via the link 110. Since the V-beam shade 106 has been moved to the operative position at this time, no glare is generated even if the auxiliary shade 104 is rotated. In other words, the length of the small-diameter section 114b (that is, the length of the play) of the drive shaft 114a of the solenoid is set to a length corresponding to a time duration during which the auxiliary shade 104 stays at the operative position until the V-beam shade 106 is moved to the operative position.

As described above, in this example, when the high/low switching shade is switched to the V-beam shade, the operation of the auxiliary shade is delayed, whereby the generation of glare at the time of switching can be prevented.

## Claims

1. A vehicle headlamp system (100) comprising:
a light source (14),
a first shade (12a, 12b, 12c, 112a, 112b, 112c, 102) arranged in front of the light source (14),
a second shade (12a, 12b, 12c, 112a, 112b, 112c, 106) arranged in front of the light source (14),
a shade actuating section (29, 114) configured to move the first shade (12a, 12b, 12c, 112a, 112b, 112c, 102) between an operative position at which the first shade (12a, 12b, 12c, 112a, 112b, 112c, 102) shields light from the light source (14) in a first light shielding area and a retracted position at which the first shade (12a, 12b, 12c, 112a, 112b, 112c, 102) does not shield the light in the first light shielding area, and to move the second shade (12a, 12b, 12c, 112a, 112b, 112c, 106) between an operative position at which the second shade (12a, 12b, 12c, 112a, 112b, 112c, 106) shields the light in a second light shielding area and a retracted position at which the second shade (12a, 12b, 12c, 112a, 112b, 112c, 106) does not shield the light in the second light shielding area,
a pattern determining section (54) configured to determine a light distribution pattern to be formed in front of the vehicle in accordance with a condition surrounding the vehicle, and
a shade control section (58) configured to send a control signal to control the shade actuating section (29, 114) in accordance with the light distribution pattern determined by the pattern determining section (54),
wherein the first shade (12a, 12b, 12c, 112a, 112b, 112c, 102) and the second shade (12a, 12b, 12c, 112a, 112b, 112c, 106) are arranged such that, when observed from a front of the vehicle headlamp (210), the first light shielding area and the second light shielding area overlap each other in a common light shielding area,
**characterized in that** the shade control section (58) is configured to control the shade actuating section (29, 114) such that, when moving the first shade (12a, 12b, 12c, 112a, 112b, 112c, 102) from the operative position to the retracted position and moving the second shade (12a, 12b, 12c, 112a, 112b, 112c, 106) from the retracted position to the operative position to switch the light distribution pattern, the light is continuously shielded in the common light shielding area.

2. The vehicle headlamp system (100) according to claim 1, wherein the shade control section (58) is configured to control the shade actuating section (29) such that, when moving the first shade (12a, 12b, 12c, 112a, 112b, 112c) from the operative position to the retracted position and moving the second shade (12a, 12b, 12c, 112a, 112b, 112c) from the retracted position to the operative position to switch the light distribution pattern, the first shade (12a, 12b, 12c, 112a, 112b, 112c) is moved from the operative position to the retracted position after moving the second shade (12a, 12b, 12c, 112a, 112b, 112c) from the retracted position to the operative position.

3. The vehicle headlamp system (100) according to claim 1 or 2, wherein the shade actuating section (29, 114) further comprises a first actuator (28, 28b, 28c, 114) to move the first shade (12a, 12b, 12c, 112a, 112b, 112c, 102), and a second actuator (28, 28b, 28c) to move the second shade (12a, 12b, 12c, 112a, 112b, 112c, 106).

4. The vehicle headlamp system (100) according to any one of the preceding claims, wherein at least one of the first shade (112a, 112b, 112c) and the second shade (112a, 112b, 112c) comprises a visible light cut filter that blocks visible light and transmits infrared light.

5. The vehicle headlamp system (100) according to any one of the preceding claims, further comprising a third shade (12c, 112c, 104) arranged in front of the light source (14),
wherein the shade actuating section (29) is configured to move the third shade (12c, 112c, 104) between an operative position at which the third shade (12c, 112c, 104) shields the light in a third light shielding area and a retracted position at which the third shade (12c, 112c, 104) does not shield the light in the third light shielding area,
wherein the third shade (12c, 112c, 104) is arranged such that, when observed from the front of the vehicle headlamp (210), the third light shielding area overlaps the first light shielding area and the second light shielding area in the common light shielding area, and
the shade control section (58) is configured to control the shade actuating section (29, 114) such that, when moving the first shade (12a, 12b, 112a, 112b, 102) from the operative position to the retracted position and moving the second shade (12a, 12b, 112a, 112b, 106) from the retracted position to the operative position to switch the light distribution pattern, the light is shielded in the common light shielding area by the third shade (12c, 112c, 104) until the second shade (12a, 12b, 112a, 112b, 106) is moved to the operative position.

6. The vehicle headlamp system (100) according to claim 5, wherein the shade control section (58) is configured to control the shade actuating section (29) such that, when moving the first shade (12a, 12b, 112a, 112b) from the operative position to the retracted position and moving the second shade (12a, 12b, 112a, 112b) from the retracted position to the operative position to form the light distribution pattern determined by the pattern determining section (54), the first shade (12a, 12b, 112a, 112b) is moved from the operative position to the retracted position after moving the third shade (12c, 112c) from the retracted position to the operative position.

7. The vehicle headlamp system (100) according to claim 6, further comprising a projection lens (20) arranged in front of the first shade (12a, 12b, 112a, 112b), the second shade (12a, 12b, 112a, 112b) and the third shade (12c, 112c),
wherein an upper end portion of the first shade (12a, 12b, 112a, 112b) is disposed on a focal plane of the projection lens (20) when the first shade (12a, 12b, 112a, 112b) is at the operative position,
an upper end portion of the second shade (12a, 12b, 112a, 112b) is disposed on the focal plane of the projection lens (20) when the second shade (12a, 12b, 112a, 112b) is at the operative position, and
an upper end portion (12c, 112c) of the third shade is disposed in front or behind the focal plane of the projection lens (20) when the third shade (12c, 112c) is at the operative position.

8. The vehicle headlamp system (100) according to any one of claims 5 to 7, wherein the shade actuating section (29) comprises a third actuator (28c) to move the third shade (12c, 112c).

9. The vehicle headlamp system (100) according to claim 5, further comprising a link mechanism (108, 110, 112) arranged between the shade actuating section (114) and the first shade (102) and between the shade actuating section (114) and the third shade (104) such that, when the first shade (102) is moved from the operative position to the retracted position, the third shade (104) is moved from the operative position to the retracted position in a delayed manner.

10. The vehicle headlamp system (100) according to any one of claims 5 to 9, wherein the third shade (12c, 112c) comprises a visible light cut filter that blocks visible light and transmits infrared light.

11. A control device (50) configured to control a vehicle headlamp (210), wherein the vehicle headlamp (210) comprises:
a light source (14),
a first shade (12a, 12b, 12c, 112a, 112b, 112c, 102) arranged in front of the light source (14),
a second shade (12a, 12b, 12c, 112a, 112b, 112c, 106) arranged in front of the light source (14), and
a shade actuating section (29, 114) configured to move the first shade (12a, 12b, 12c, 112a, 112b, 112c, 102) between an operative position at which the first shade (12a, 12b, 12c, 112a, 112b, 112c, 102) shields light from the light source (14) in a first light shielding area and a retracted position at which the first shade (12a, 12b, 12c, 112a, 112b, 112c, 102) does not shield the light in the first light shielding area, and to move the second shade (12a, 12b, 12c, 112a, 112b, 112c, 106) between an operative position at which the second shade (12a, 12b, 12c, 112a, 112b, 112c, 106) shields the light in a second light shielding area and a retracted position at which the second shade (12a, 12b, 12c, 112a, 112b, 112c, 106) does not shield the light in the second light shielding area,
wherein the first shade (12a, 12b, 12c, 112a, 112b, 112c, 102) and the second shade (12a, 12b, 12c, 112a, 112b, 112c, 106) are arranged such that, when observed from a front of the vehicle headlamp (210), the first light shielding area and the second light shielding area overlap each other in a common light shielding area,
wherein the control device (50) comprises:
a pattern determining section (54) configured to determine a light distribution pattern to be formed in front of the vehicle in accordance with a condition surrounding the vehicle, and
a shade control section (58) configured to send a control signal to control the shade actuating section (29, 114) in accordance with the light distribution pattern determined by the pattern determining section (54),
**characterized in that** the shade control section (58) is configured to control the shade actuating section (29, 114) such that, when moving the first shade (12a, 12b, 12c, 112a, 112b, 112c, 102) from the operative position to the retracted position and moving the second shade (12a, 12b, 12c, 112a, 112b, 112c, 106) from the retracted position to the operative position to switch the light distribution pattern, the light is continuously shielded in the common light shielding area.

12. A vehicle headlamp (210) comprising:
a light source (14),
a first shade (12a, 12b, 12c, 112a, 112b, 112c, 102) arranged in front of the light source (14),
a second shade (12a, 12b, 12c, 112a, 112b, 112c, 106) arranged in front of the light source (14), and
a shade actuating section (29, 114) configured to move the first shade (12a, 12b, 12c, 112a, 112b, 112c, 102) between an operative position at which the first shade (12a, 12b, 12c, 112a, 112b, 112c, 102) shields light from the light source (14) in a first light shielding area and a retracted position at which the first shade (12a, 12b, 12c, 112a, 112b, 112c, 102) does not shield the light in the first light shielding area, and to move the second shade (12a, 12b, 12c, 112a, 112b, 112c, 106) between an operative position at which the second shade (12a, 12b, 12c, 112a, 112b, 112c, 106) shields the light in a second light shielding area and a retracted position at which the second shade (12a, 12b, 12c, 112a, 112b, 112c, 106) does not shield the light in the second light shielding area,
wherein the first shade (12a, 12b, 12c, 112a, 112b, 112c, 102) and the second shade (12a, 12b, 12c, 112a, 112b, 112c, 106) are arranged such that, when observed from a front of the vehicle headlamp (210), the first light shielding area and the second light shielding area overlap each other in a common light shielding area, and
the vehicle headlamp (210) is configured to receive a control signal indicative of a light distribution pattern to be formed,
**characterized in that**, upon receipt of the control signal, the shade actuating section (29, 114) moves the first shade (12a, 12b, 12c, 112a, 112b, 112c, 102) from the operative position to the retracted position and moves the second shade (12a, 12b, 12c, 112a, 112b, 112c, 106) from the retracted position to the operative position to switch the light distribution pattern such that the light is continuously shielded in the common light shielding area.
